# EUROPEAN PATENT SPECIFICATION

(11) **EP 3 574 406 B1**
(45) Date of publication and mention of the grant of the patent: **29.05.2024**
(21) Application number: 17706688.3
(22) Date of filing: 30.01.2017
(51) Int. Cl.: G06F 11/36

(54) **METHOD AND SYSTEM FOR AUTOMATED TESTING OF COMPUTER PROGRAM CODE**
VERFAHREN UND SYSTEM ZUR AUTOMATISIERTEN PRÜFUNG EINES COMPUTERPROGRAMMCODES
PROCÉDÉ ET SYSTÈME DE TEST AUTOMATISÉ DE CODE DE PROGRAMME D'ORDINATEUR

(43) Date of publication of application: 04.12.2019
(73) Proprietor: UBS Hainer Unternehmensberatung & Software Service GmbH, 36341 Lauterbach (DE)
(72) Inventor: RÖßLER, Sebastian Jeremias, 76879 Ottersheim (DE)
(74) Representative: LBP Lemcke, Brommer & Partner Patentanwälte mbB
(86) International application number: PCT/EP2017/051951
(87) International publication number: WO 2018/137785

(56) References cited:
- WO-A1-2007/118271
- US-A1- 2009 217 302
- US-A1- 2015 286 556

## Description

The invention relates to a semi-automatic method for testing program code in the form of graphical user interfaces (GUI) by means of a dedicated software tool in interaction with said program code, the program code defining a system under test (SUT) with a plurality of components displayed on the graphical user interface and respective attributes, wherein a component is used in several tests maintained in said software tool, as further defined in the preamble of claim 1.

The invention also relates to a software code for providing, when executed on a suitable computer device, a semi-automatic method for testing program code, in particular graphical user interfaces, by means of a dedicated software tool, which interacts with said program code during execution thereof according to claim 8.

The invention further relates to a testing system for semi-automatic testing of program code, in particular graphical user interfaces, by means of a dedicated software tool, the system further comprising a suitable computer device for executing said software code, said program code and a modified version of said program code according to claim 9.

The state of the art on automated graphical user interface (GUI) testing has two flavors: capture/replay and direct scripting in various forms and frameworks. Since the result of capturing is usually a script which then is replayed, both approaches essentially boil down to the same and are often combined.

Prior art document US 2009/0217302 A1 relates to test script transformation architecture that helps generate accurate test scripts for evolving applications. The architecture facilitates the automatic generation of new test scripts to test subsequent application versions, while reducing the time, cost, and resource expenditures needed to arrive at new test scripts.

The script contains user actions that should be simulated during script execution as a combination of the type of action (e.g. a click) and the action target (e.g. a button), where the target is identified from all available components using one or several of various identification criteria (such as a label, X/Y-coordinates, etc.).

After each action, the script may contain a number of checks or assertions, which are then executed and determine the correctness of the test result. Each of these checks also needs to identify the component the check is executed upon. This major problem is called component recognition or component identification.

The scripting approach, as described in US 2009/0217302 A1, has several drawbacks:
- Even if a component is displayed only once on the GUI, it is often used in several tests. A single change to that component often means adapting many test scripts (and both actions and checks).
- Frequent changes to the GUI cause a lot of additional effort to manually maintain the test scripts and lower confidence in the test result - as usually not the SUT is defect, but the test.
- User actions have to be enhanced manually after recording to specify which attributes are used for identification of the target component and checks have to be defined manually to specify the expected value of one or several of such attributes. This causes a lot of additional effort.

The combination of features defined by the preamble of claim 1 achieves some important improvements over the pertinent prior art:
- Instead of defining individual targets of (simulated) user actions, the whole current state is captured, including all of the available components and all of their relevant attributes.
- This approach means that no more assertions or checks need to be recorded. Instead of a user-defined expected value, it is simply checked if the SUT displays the same value as during capturing (this is equivalent to checking for consistency rather than for correctness).
- However this approach requires maintaining not only one component and adjusting it after changes of the system under test (SUT), but maintaining a large plurality of components - after each action.
- To remedy this problem, the invention comprises a semi-automated way to maintain the test cases and adjust them to the changes in the SUT: display at least some - preferably all - of the detected changes and let the user decide if he or she wants to apply those changes or discard them. Discarding of change may imply that they stem from an undesired change of the SUT (regression) which in turn implies a need for correcting the SUT (defect found).

However, while the method as defined in the preamble of claim 1 remedies many of the above-mentioned drawbacks of the scripting approach, it is virtually unwieldy in practice since it would involve, for a program code of normal complexity, hundreds of tests with thousands of recorded states and millions of recorded details.

It is therefore the object of the present invention to achieve a method for testing program code which requires less manual effort and produces better and more trustworthy test results while offering means for robust and efficient maintenance of hundreds of tests with thousands of recorded states and millions of recorded details. It is also an object of the invention to achieve a software code (software tool) as well as a testing system which use the method according to the invention for improved testing of program code.

These objects are achieved by the method of claim 1, the computer program of claim 8 and the testing system of claim 9. Adavantageous further embodiments of the inventive concept are defined in the sub-claims.

According to the invention, according to one alternative the detected changes are grouped by component and are displayed only once for a given component, e.g. a special kind of text field, for approval or discarding by the user, even if said component is present in a plurality of different tests. This may further reduce manual efforts on the part of the user thus enhancing testing efficiency and trustworthiness. It is highly efficient to group changes by component, because, e.g., if a button is shown on the GUI on three occasions, it is likely that an adjustment to the button in one occasion should also be applied to it in the other two occasions so that manual effort during testing may be reduced significantly.

According to an alternative embodiment of the method according to the invention, at least some of the detected changes are grouped by attribute type and are applied to a plurality of components comprising an element with a given attribute type with one corresponding approving user input, which may further reduce manual efforts on the part of the user thus enhancing testing efficiency. A typical example would be a 'text' attribute that is changed from 'Meyer' to 'Muller', which change can be applied at once to a text field, a table cell, a label, a combobox and a menu item. Alternatively, a 'font size' attribute could have changed from 10 to 12, which change can be applied at once to a current state of a large number of components of different types.

According to another alternative embodiment of the method according to the invention, at least some of the detected changes are grouped by component type and are applied to a current state of a plurality of components of a given type with one corresponding approving user input, which may even further reduce manual efforts on the part of the user thus enhancing testing efficiency. A typical example would be an 'enabled' attribute that is changed from 'true' to 'false' and can be applied to a large number of components of type text field. Alternatively, a 'text' attribute could have changed, such that a plurality of different values take on a plurality of respective new values, and can be applied to all components of type 'table cell'. Furthermore, changing the color of several components could be handled this way, too.

According to still another alternative embodiment of the method according to the invention, at least some of the detected changes are grouped by parent and structure and are applied to a current state of a larger number of components or to all components within a given structure for a given parent with one corresponding approving user input, which may reduce manual efforts on the part of the user even more thus enhancing testing efficiency. For instance, III (user input) elements are structured hierarchically: a window has a menu bar and panels. The menu bar has menus, each of which have menu entries. That way, every UI element has a "parent" except for the window itself, which is the top-level element. In this way, changes within a given window can be automatically applied to every element belonging to (or depending from) said window. Another typical example relates to tables: if multiple cells of a table are changed, one can apply those changes to all cells of the row, the table, or even the overall window comprising said table.

According to an advantageous alternative embodiment of the method according to the invention, at least some of the detected changes are defined as local changes with respect to a corresponding characteristic of a parent component, and are grouped and displayed only once for said parent component for approval or discarding by the user. For instance, X/Y coordinates on a screen could be saved in relation to the parent coordinates, instead of absolute screen values.

According to a further advantageous alternative embodiment of the method according to the invention, at least some of the detected changes are grouped as changes of an internal structure of a given component and displayed as changes of that component only. In other words: if the internal structure of a component is changed, these changes may be shown as a change of that component only, not as a change of all of its child components as well.

The general approach according to the present invention also allows for a much better identification of target components during execution in case of change: one can simply compare all former components with all available components and create a direct one-on-one assignment. In case of changes, this approach is much more robust, as one does not only compare singular information fragments but whole pictures. It is analogous to solving a puzzle: instead of comparing a single piece of an old puzzle to a new puzzle, one can compare all pieces of an old puzzle to all pieces of a new puzzle - if some pieces have changed, it is easier to guess which of the old pieces turned into which of the new pieces. Accordingly, in a preferred further embodiment of the method according to the invention, during re-executing, target components are identified by comparing the components of the system under test with the components of the modified system under test and by creating one-on-one assignments between a component of the system under test and a corresponding component of the modified system under test.

According to a highly preferred further embodiment of the method according to the invention, multiple attributes per component are used for component identification. This is in contrast to prior art approaches, because maintaining several attributes to identify components means an increase in manual effort (the test script needs to be maintained if one of the attributes changes). Therefore the current state-of-the-art discourages the usage of more than one attribute to identify a component. The inventive approach, however, allows for a semi-automated maintenance (the user only needs to verify and approve a change, the software tool then applies it automatically to a current state of the SUT). Therefore, in the context of the present invention it is less of a problem to use multiple attributes to identify a single component, which makes component recognition much more robust.

In the context of the present invention, one can also add some additional attributes that are used to identify components. One of those attributes may be called "code location": the program code is instrumented such that upon creation of a component the "location of the creation" in the code as specified by class, method, line number and call stack is recorded and used for component identification. Accordingly, in yet another embodiment of the method according to the invention, identification of components is at least partly based on additional attributes, which additional attributes are generated for a given component during or in connection with executing of the program code upon creation of that given component, which additional attributes may comprise one or more from a group including class, method, line number and call stack. This may comprise a class or method name/type/etc., as defined in the program code; a line number of a program source code as included in a compiled version of the program code by a compiler; a call stack as arising during execution of structured code, where the code in one method calls other methods, which in turn call other methods, leading to a so-called `call stack' as a multitude of combinations of class, method and line number. A non-limiting (pseudo code) example for this would be: de.package.ClassX.methodA(122) calling de.package.ClassY.methodB(321) calling de.package.ClassZ.methodC(2532), together comprising an excerpt of a call stack.

Some components display date/time or other transient values that change constantly. In order to reduce manual efforts, one may allow the user to decide to ignore these components permanently. Accordingly, in a further embodiment of the method according to the invention, components that display transient values, in particular time and/or date, are excluded from displaying the detected changes, preferably based on a corresponding user input.

Sometimes test cases do not need to change in terms of values that are checked, but instead in terms of the way the SUT behaves (e.g. instead of clicking a button and then filling some fields, the SUT now requires to click the button, confirm a message and then fill the field, or fill the fields in a different order, etc.). In order to allow many test cases to be adjusted at once, the user can create what may be called an "execution hook". The user can specify that in a certain situation - defined by the last executed action, the current state of the SUT and the next to-be-executed action - one or several additional actions should be executed instead, which actions are thus being "inserted" into the sequence of user generated actions that is reproduced.

Accordingly, in still a further embodiment of the method according to the invention, prior to execution, an execution hook is specified by a user input, which execution hook is defined by a last executed action of the system under test, by a current state of the system under test and by an action to be executed next by the system under test, this execution hook defining one or more additional actions to be executed next before said action to be executed next, wherein preferably the additional actions are automatically applied to a recorded sequence of actions in similar or identical situations. This approach solves the following problem: Assume there are many tests in which a specific functionality is executed, e.g. 500 different tests. Further assume that the SUT changes in that functionality (e.g. requires an additional confirmation before deleting a data record or completely replacing a key shortcut with a button). Traditionally, this would require the user to manually change all of the tests which would require considerable effort and be error prone. Using the concept explained above, the user only has to define one execution hook that matches that situation, and all of the tests are changed "passively" upon execution.

In analog fashion, the user may want to specify one or several actions that should be skipped during execution, thus being "removed" from the recorded sequence of user actions. Accordingly, in another embodiment of the method according to the invention, prior to execution, an execution hook is specified by a user input, which execution hook is defined by a last executed action of the system under test, by a current state of the system under test and by a plurality of actions to be executed next by the system under test, this execution hook defining one or more actions to be removed from said plurality of actions to be executed next, wherein preferably the actions to be removed are automatically removed from a recorded sequence of actions in similar or identical situations. Further characteristics and advantages will now be described with respect to exemplary embodiments depicted in the appended drawing figures.

Additional information concerning possible embodiments of the invention can be gathered from a White Paper on "Fully-Automatied Regression Testing" authored by the applicant.
Fig. 1 shows a schematic overview of the software code according to the invention in interaction with a system under test;
Fig. 2 shows a behavioral Diff between a current state of a system under test and a modified state of the same system;
Fig. 3 shows how a user interaction changes the state of the system under test;
Fig. 4 shows how the user is replaced in the context of an embodiment of the invention;
Fig. 5 shows the comparison of a current state of a system under test and a modified state thereof;
Fig. 6 schematically shows grouping of detected differences;
Fig. 7 schematically illustrates the concept of locally containing structural changes;
Fig. 8 illustrates a change of a parent not being shown as a change of its child components;
Fig. 9 shows mutual assignment of different components from different states; and
Fig. 10 shows indentification of a component using multiple attributes.

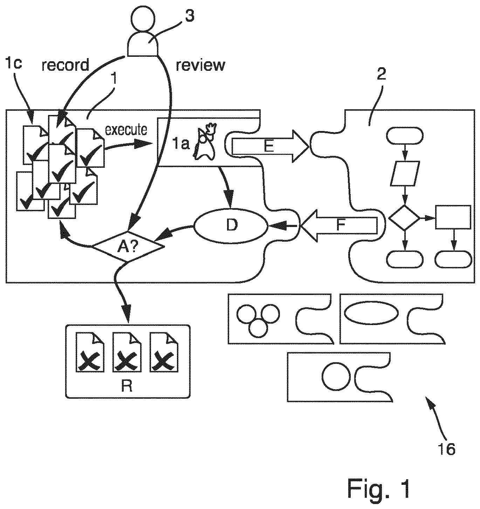

Fig. 1 is a schematic overview of the software code according to the invention in interaction with a system under test. Said software code is schematically shown at reference numeral 1 in its executed form, i.e. in th form of a dedicated software tool named "ReTest" in Fig. 1. Reference numeral 2 denotes a system under test (SUT) based on corresponding program code (not shown). The software tool 1 and the SUT 2 are devised to interact, as schematically illustrated by the jigsaw-type puzzle pieces, thus defining a testing system for semi-automatic testing of program code, in particular but not limited to graphical user interfaces, by means of said dedicated software tool 1.

The software tool 1 comprises an interface module 1a for interaction with SUT 2, which interface modul 1a is - without limitation - adapted for the Swing GUI technology. Optional alternative interface modules 1b comprise - without limitation - web interfaces ("Web"), Java FX and SWT. Via said interface module 1a, software tool 1 controls execution (arrow E) of SUT 2 by means of tests (test scripts) 1c, which SUT 2 then sends back feedback information (arrow F) to software tool 1. Governed by software tool 1 and the software code embodied therein, a number of processes are then carried out based on said back feedback information F: the information is first checked for differences between a previous state of SUT 2 and a current state thereof at reference numeral D. This difference D is then evaluated a reference numeral A in terms of whether or not the detected differences should be applied to tests 1c. Depending on a result of this evaluation, a regression is detected at reference numeral R, or the result is used to modify future tests, which are represented as test scripts or recorded action sequences at reference numeral 1c (cf. above). Basically, regression testing is a type of software testing that verifies that software previously developed and tested still performs correctly even after it was changed or interfaced with other software. One of the main reasons for regression testing is to determine whether a change in one part of the software affects other parts of the software.

User 3 reviews the evaluation at reference numeral A, preferably by viewing them in graphical form on a display (monitor screen; not shown), and controls recording of tests 1c (by means of suitable storing devices; not shown). To this end, user 3 may use any kind of known input device, e.g. a mouse or a touch screen, for generating user input in relation with the displayed changes, and the software tool 1 then applies or discards the displayed changes based on the user input.

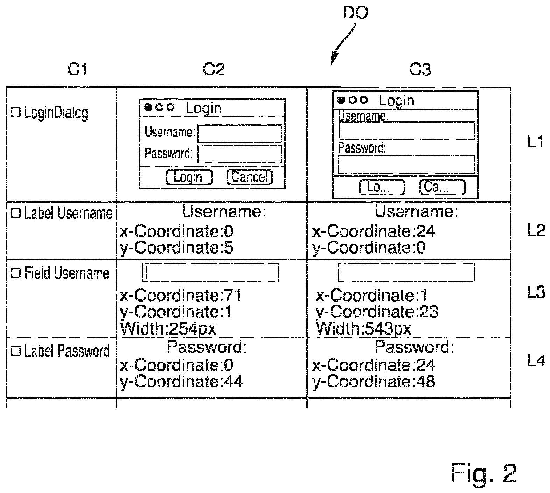

Fig. 2 shows a so-called behavioral Diff between a current state of a system under test (SUT 2, cf. Fig. 1) and a modified state of that system after some modification to the system under test. The Diff is based on the feedback information F (Fig. 1) gathered by software tool 1 (Fig. 1) as compared to equivalent information gathered during a previous test; it is graphically formatted to allow for easy evaluation by a user, as shown in Fig. 2.

The graphical Diff output, referenced as DO in Fig. 2, comprises - without limitation - three columns denoted C1, C2, and C3, from left to right. Column C1 comprises checkboxes (one per line L1-L4, top to bottom) together with an identifier, e.g. "Label Password" in line L4. Column C2 comprises different components of the system under test in its previous state, and column C3 comprises the same components of the system under test in its current state - one per line L1-L4. For instance, as can be seen from line L2, text label "Username" has changed its location coordinates or location attributes (relative to the "Login Dialog" box shown in line L1) from x=0 and y=5 to x=24 and y=0. By clicking on checkbox "Label Username" in column C1, the user can accept this change, which choice can be applied to other cases in which a corresponding difference has been detected. By thus grouping differences, manual effort can be significantly reduced.

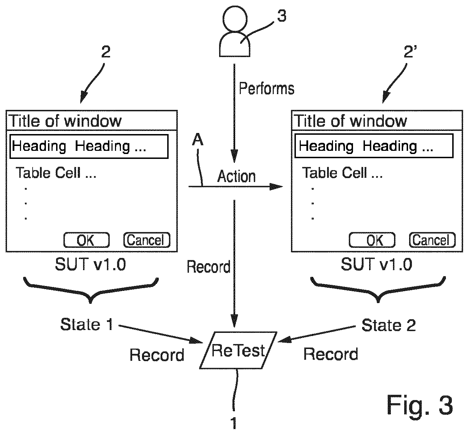

Fig. 3 is a schematical representation of how a user interaction changes the state of the system under test from a first State 1 to a subsequent (second) State 2 and how both current states and user action are recorded. The user is depicted at 3. Reference numeral 2 denotes the SUT, as in Fig. 1, in State 1, whereas reference numeral 2' denotes the same SUT but in a different state, i.e. State 2. These states State 1, State 2 are linked by an action performed by user 3. This action is symbolically represented by arrow A. It can be - without limitation - a mouse click or a text input and it entails a change of SUT 2 (State 1) toward SUT 2' (State 2). The action is recorded by software tool 1 ("ReTest"; cf. Fig. 1) together with complete system information describing State 1 and State 2 (arrows denoted "Record") in Fig. 3.

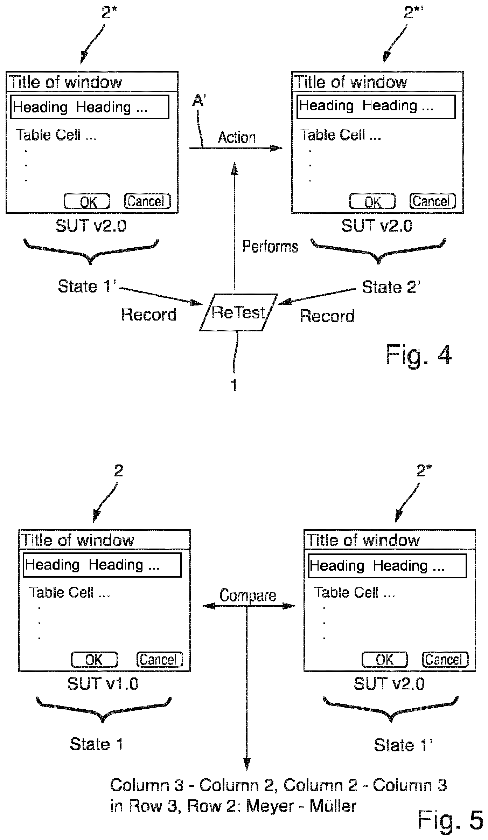

Fig. 4 is a schematical representation of how the proposed invention, in a particular embodiment thereof, replaces the user in the interaction with the system under test as shown in Fig. 3 and records a modified state of a modified system under test for later comparison with a recorded current state.

In Fig. 4, reference numeral 2* denotes the SUT as shown in Fig. 3, but in a different or modified state (State 1'). In this state, action A' is performed on the system under test, wherein the prime denotes that said action A' is the same as action A in Fig. 3, but performed by software tool 1 instead of a user. Action A' entails a change of SUT 2* (State 1') toward SUT 2*' (State 2'). Complete system state information is recorded by software tool 1 ("ReTest"; cf. Fig. 1) for later comparison, as stated above.

Fig. 5 schematically shows the comparison of a current state of a system under test and a modified state thereof together with some resulting differences. Same refereces numerals are used to designate the same elements as in Fig. 3 and Fig. 4, respectively. SUT 2 in its respective State 1 is compared to modified SUT 2* in its respective State 1. In the present illustrative case this comparison yields that, in a table, columns 2 and 3 have been interchanged. Furthermore, in a particular table cell a respective value "Meyer" has been changed to read "Müller".

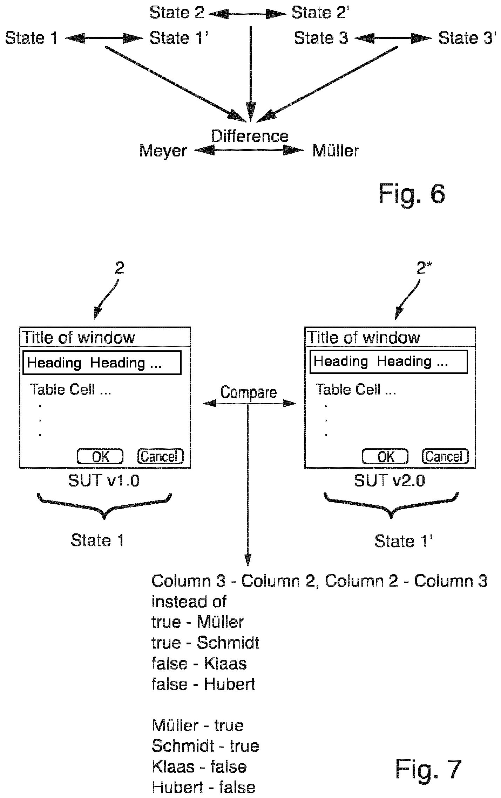

Fig. 6 schematically shows grouping of detected differences: multiple differences (only one shown - "Meyer" changed to "Müller") resulting from comparison of multiple current states (State 1, State 2, State 3) with modified states (State 1', State 2', State 3' - presumably modified by multiple actions) are grouped by component, i.e. a given table cell, and are graphically presented to the user as a single difference to be approved or discarded. This is equivalent to saying that some of the detected changes are grouped by attribute type and are applied to a current state of a plurality of components comprising an element with a given attribute type with one corresponding approving user input. Graphical presentation preferably corresponds to Fig. 2.

Fig. 7 schematically shows how structural changes that arise from differences are kept local (locally contained). In this particular example, which is in analogy with the situation in Fig. 5 as far as the SUTs 2, 2* are concerned, two columns of a table are switched. In a straightforward implementation of the inventive concept this would result in a great number of detected (and displayed) differences: text values "true" and "false" being replaced by the corresponding text values of the other column in the same row, and vice versa. This would entail considerable manual effort for checking and approving (or discarding) said differences. Instead, in a preferred embodiment thereof the invention recognizes the switching of columns and only presents this "higher level difference" to the user for approval, e.g. with a corresponding checkbox as in Fig. 2. This is equivalent to saying that some of the detected changes are grouped by parent and structure and are applied to a current state of a larger number of components or to all components within a given structure for a given parent with one corresponding approving user input.

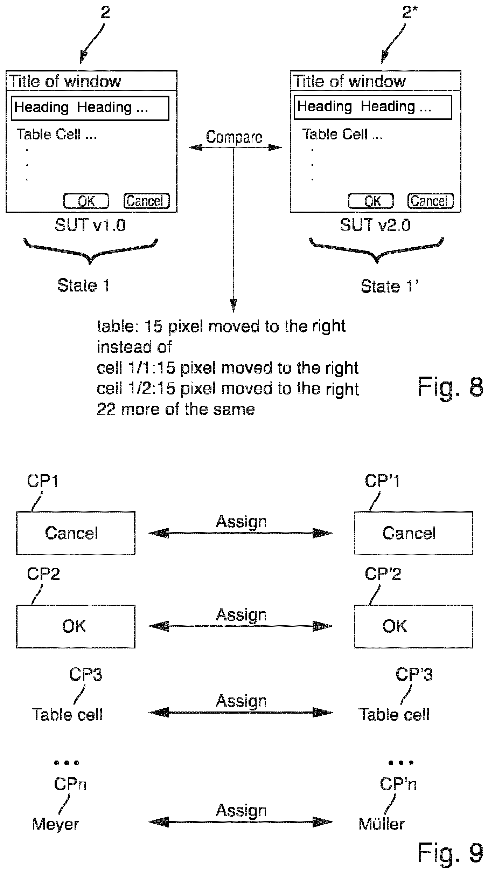

Fig. 8 schematically illustrates that a change of a parent structure, in some embodiments of the invention, is not additionally shown as a change of the affected child components, thus limiting the number of displayed changes and reducing manual effort. In this particular example, which is in analogy with the situation in Fig. 5 as far as the SUTs 2, 2* are concerned, a table has been moved to the right by 15 pixels. In a straightforward implementation of the inventive concept this would result in a great number of detected (and displayed) differences: individual table cells moved by said 15 pixels. This would entail considerable manual effort for checking and approving (or discarding) said differences. Instead, in a preferred embodiment thereof the invention recognizes the moving of the whole table and only presents this "higher level difference" to the user for approval, e.g. with a corresponding checkbox as in Fig. 2. This is equivalent to saying that some of the detected changes are defined as local changes with respect to a corresponding characteristic of a parent component, and are grouped and displayed only once for said parent component for approval or discarding by the user.

Fig. 9 schematically illustrates how different components CP1-CPn from a current state (left) and corresponding components CP'1-CP'n from a modified state (right) of an SUT are assigned to one another like puzzle pieces of two puzzles, which assignment is illustrated by means of double arrows. Improving the reliability of these assignments is one of the results in connection with embodiments of the present invention, and it helps to make testing more efficient and robust. In this way, during re-executing, target components can be identified by comparing the components of a system under test with the components of a modified system under test and by creating one-on-one assignments between a component of the system under test and a corresponding component of the modified system under test.

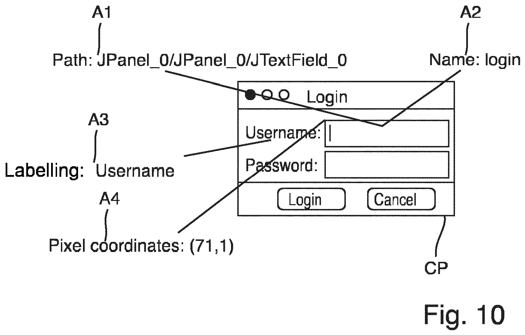

Fig. 10 schematically illustrates how a single user interface (UI) component (i.e., a text field) CP can identified by using multiple attributes, as proposed in embodiments of the present invention. Such attributes A1-A4 can be any one or more of 'path' A1 from parent internal name A2, label A3, pixel coordinates A4, etc. In addition (or alternatively) to these attributes, identification of components can be based on additional attributes, which additional attributes are generated for a given component during or in connection with executing of the program code upon creation of that given component, which additional attributes may comprise one or more from a group including class, method, line number and call stack, as detailed farther up.

## Claims

1. A computer-implemented method for testing program code corresponding to a graphical user interface by means of a dedicated software tool in interaction with said program code, the program code defining a system under test with a plurality of components displayed on the graphical user interface and respective attributes, wherein a component is used in several tests maintained in said dedicated software tool the method comprising
a) providing the program code;
b) executing the program code, involving at least one user generated action, and capturing at least one current state of the system under test;
c) providing a modified version of the program code, thus providing a modified system under test;
d) executing the modified program code and capturing a modified state of the modified system under test, wherein the at least one user generated action is reproduced by the dedicated software tool;
e) comparing the current state of the system under test and the modified state of the modified system under test and detecting changes in the system under test, which changes correspond to differences between the current state of the system under test and the modified state of the system under test;
f) displaying at least part of the detected changes to a user and soliciting corresponding user input in terms of applying or discarding the displayed changes; and
g) applying the detected changes to a corresponding component or discarding the detected changes based on the corresponding user input by automatically updating the current state of the system under test;
wherein at least some of the detected changes are grouped according to predetermined characteristics;
wherein said current state comprises all of the available components and all of the components' attributes;
**characterized in that**
said detected changes are:
grouped by component; or
grouped by attribute type and are applied to a current state of a plurality of components comprising an element with a given attribute type; or
grouped by component type and are applied to a current state of a plurality of components of a given type; or
grouped by parent and structure and are applied to a current state of a larger number of components or to all components within a given structure for a given parent; or
defined as local changes with respect to a corresponding characteristic of a parent component and grouped for said parent component;
wherein each of the grouped changes are displayed as a single difference to be approved or discarded by the user.

2. The method of claim 1, wherein
during re-executing, target components are identified by comparing the components of the system under test with the components of the modified system under test and by creating one-on-one assignments between a component of the system under test and a corresponding component of the modified system under test.

3. The method of claim 1, wherein
identification of individual components is carried out based on a plurality of different attributes per component.

4. The method of claim 1, wherein
identification of components is at least partly based on additional attributes, which additional attributes are generated for a given component during or in connection with executing of the program code upon creation of that given component, which additional attributes may comprise one or more from a group including class, method, line number and call stack.

5. The method of claim 1, wherein
components that display transient values, in particular time and/or date, are excluded from displaying the detected changes, preferably based on a corresponding user input.

6. The method of claim 1, wherein
prior to execution, an execution hook is specified by a user input, which execution hook is defined by a last executed action of the system under test, by a current state of the system under test and by an action to be executed next by the system under test, this execution hook defining one or more additional actions to be executed next before said action to be executed next, wherein preferably the additional actions are automatically applied to a recorded sequence of actions in similar or identical situations.

7. The method of claim 1, wherein
prior to execution, an execution hook is specified by a user input, which execution hook is defined by a last executed action of the system under test, by a current state of the system under test and by a plurality of actions to be executed next by the system under test, this execution hook defining one or more actions to be removed from said plurality of actions to be executed next, wherein preferably the actions to be removed are automatically removed from a recorded sequence of actions in similar or identical situations.

8. A computer program comprising instructions which, when the program code is executed by a computer, cause the computer to carry out the method defined in any of claims 1-7.

9. A testing system for testing of program code corresponding by means of a dedicated software tool, comprising software code as defined in claim 8 for providing, when executed on a suitable computer device, said dedicated software tool which interacts with said program code during execution thereof, the system further comprising said suitable computer device for executing said software code, said program code and said modified program code, said computer device further including a graphical display device for displaying detected changes to a user, with an input device for obtaining user input in relation with the displayed changes, and with said dedicated software tool for applying or discarding the displayed changes by the user based on the user input. to a graphical user interface

## Patentansprüche

1. Computerimplementiertes Verfahren zum Prüfen eines Programmcodes, der einer grafischen Benutzeroberfläche entspricht, mittels eines dedizierten Softwaretools in Zusammenwirkung mit dem Programmcode, wobei der Programmcode ein zu prüfendes System mit einer Vielzahl von Komponenten, die auf der grafischen Benutzeroberfläche angezeigt werden, und jeweilige Attribute definiert, wobei eine Komponente bei mehreren Prüfungen verwendet wird, die in dem dedizierten Softwaretool gehalten werden, wobei das Verfahren umfasst:
a) Bereitstellen des Programmcodes;
b) Ausführen des Programmcodes, das mindestens eine vom Benutzer generierte Aktion einbezieht, und Erfassen mindestens eines aktuellen Zustands des zu prüfenden Systems;
c) Bereitstellen einer modifizierten Version des Programmcodes, wodurch ein modifiziertes zu prüfendes System bereitgestellt wird;
d) Ausführen des modifizierten Programmcodes und Erfassen eines modifizierten Zustands des modifizierten zu prüfenden Systems, wobei die mindestens eine vom Benutzer generierte Aktion von dem dedizierten Softwaretool reproduziert wird;
e) Vergleichen des aktuellen Zustands des zu prüfenden Systems und des modifizierten Zustands des modifizierten zu prüfenden Systems und Erkennen von Änderungen im zu prüfenden System, wobei die Änderungen Unterschieden zwischen dem aktuellen Zustand des zu prüfenden Systems und dem modifizierten Zustand des zu prüfenden Systems entsprechen;
f) Anzeigen mindestens eines Teils der erkannten Änderungen für einen Benutzer und Anfordern entsprechender Benutzereingabe in Bezug auf das Anwenden oder Verwerfen der angezeigten Änderungen; und
g) Anwenden der erkannten Änderungen auf eine entsprechende Komponente oder Verwerfen der erkannten Änderungen basierend auf der entsprechenden Benutzereingabe durch automatisches Aktualisieren des aktuellen Zustands des zu prüfenden Systems;
wobei mindestens einige der erkannten Änderungen gemäß vorbestimmten Merkmalen gruppiert werden;
wobei der aktuelle Zustand alle von den verfügbaren Komponenten und alle von den Attributen der Komponenten umfasst;
**dadurch gekennzeichnet, dass**
die erkannten Änderungen:
nach Komponente gruppiert werden; oder
nach Attributtyp gruppiert, und auf einen aktuellen Zustand einer Vielzahl von Komponenten, die ein Element mit einem gegebenen Attributtyp umfassen, angewendet werden; oder
nach Komponententyp gruppiert, und auf einen aktuellen Zustand einer Vielzahl von Komponenten eines gegebenen Typs angewendet werden; oder
nach übergeordnetem Element und Struktur gruppiert, und auf einen aktuellen Zustand einer größeren Anzahl von Komponenten oder auf alle Komponenten innerhalb einer gegebenen Struktur für ein gegebenes übergeordnetes Element angewendet werden; oder
als lokale Änderungen in Bezug auf ein entsprechendes Merkmal einer übergeordneten Komponente definiert, und für die übergeordnete Komponente gruppiert werden;
wobei jede der gruppierten Änderungen als einzelner Unterschied angezeigt wird, der vom Benutzer zu genehmigen oder zu verwerfen ist.

2. Verfahren nach Anspruch 1, wobei
während der erneuten Ausführung Zielkomponenten durch Vergleichen der Komponenten des zu prüfenden Systems mit den Komponenten des modifizierten zu prüfenden Systems und durch Erzeugen von Eins-zu-eins-Zuordnungen zwischen einer Komponente des zu prüfenden Systems und einer entsprechenden Komponente des modifizierten zu prüfenden Systems identifiziert werden.

3. Verfahren nach Anspruch 1, wobei
die Identifizierung einzelner Komponenten basierend auf einer Vielzahl unterschiedlicher Attribute je Komponente erfolgt.

4. Verfahren nach Anspruch 1, wobei
die Identifizierung von Komponenten mindestens teilweise auf zusätzlichen Attributen basiert, wobei die zusätzlichen Attribute für eine gegebene Komponente während oder in Verbindung mit der Ausführung des Programmcodes bei der Erzeugung dieser bestimmten Komponente generiert werden, wobei die zusätzlichen Attribute eines oder mehrere aus einer Gruppe umfassen können, die Klasse, Verfahren, Zeilennummer und Aufrufstapel umfasst.

5. Verfahren nach Anspruch 1, wobei
Komponenten, die vorübergehende Werte, insbesondere Zeit und/oder Datum anzeigen, vorzugsweise basierend auf einer entsprechenden Benutzereingabe, von der Anzeige der erkannten Änderungen ausgeschlossen werden.

6. Verfahren nach Anspruch 1, wobei
vor der Ausführung ein Ausführungs-Hook durch eine Benutzereingabe spezifiziert wird, wobei der Ausführungs-Hook durch eine zuletzt ausgeführte Aktion des zu prüfenden Systems, durch einen aktuellen Zustand des zu prüfenden Systems und durch eine als nächstes von dem zu prüfenden System auszuführende Aktion definiert ist, wobei dieser Ausführungs-Hook eine oder mehrere zusätzliche Aktionen definiert, die als nächstes vor der als nächstes auszuführenden Aktion auszuführen sind, wobei die zusätzlichen Aktionen vorzugsweise automatisch auf eine aufgezeichnete Sequenz von Aktionen in ähnlichen oder identischen Situationen angewendet werden.

7. Verfahren nach Anspruch 1, wobei
vor der Ausführung ein Ausführungs-Hook durch eine Benutzereingabe spezifiziert wird, wobei der Ausführungs-Hook durch eine zuletzt ausgeführte Aktion des zu prüfenden Systems, durch einen aktuellen Zustand des zu prüfenden Systems und durch eine Vielzahl von als nächstes von dem zu prüfenden System auszuführenden Aktionen definiert ist, wobei dieser Ausführungs-Hook eine oder mehrere Aktionen definiert, die aus der Vielzahl von als nächstes auszuführenden Aktionen zu entfernen sind, wobei die zu entfernenden Aktionen vorzugsweise automatisch aus einer aufgezeichneten Sequenz von Aktionen in ähnlichen oder identischen Situationen entfernt werden.

8. Computerprogramm, das Anweisungen umfasst, die, wenn das Programm von einem Computer ausgeführt wird, den Computer veranlassen, das Verfahren nach einem der Ansprüche 1-7 auszuführen.

9. Prüfsystem zum Prüfen eines Programmcodes, der einer grafischen Benutzeroberfläche entspricht, mittels eines dedizierten Softwaretools, das einen Softwarecode nach Anspruch 8 umfasst, um wenn er auf einer geeigneten Computervorrichtung ausgeführt wird, das dedizierte Softwaretool bereitzustellen, das bei Ausführung desselben mit dem Programmcode zusammenwirkt, wobei das System weiter die geeignete Computervorrichtung zum Ausführen des Softwarecodes, des Programmcodes und des modifizierten Programmcodes umfasst, wobei die Computervorrichtung weiter eine grafische Anzeigevorrichtung zum Anzeigen erkannter Änderungen für einen Benutzer beinhaltet, mit einer Eingabevorrichtung zum Erhalten einer Benutzereingabe in Bezug auf die angezeigten Änderungen, und mit dem dedizierten Softwaretool zum Anwenden oder Verwerfen der angezeigten Änderungen durch den Benutzer basierend auf der Benutzereingabe.

## Revendications

1. Procédé mis en oeuvre par ordinateur pour tester un code de programme correspondant à une interface utilisateur graphique au moyen d'un outil logiciel dédié en interaction avec ledit code de programme, le code de programme définissant un système sous test avec une pluralité de composants affichés sur l'interface utilisateur graphique et des attributs respectifs, dans lequel un composant est utilisé dans plusieurs tests conservés dans ledit outil logiciel dédié, le procédé comprenant :
a) la fourniture du code de programme ;
b) l'exécution du code de programme, impliquant au moins une action générée par un utilisateur, et la capture d'au moins un état actuel du système sous test ;
c) la fourniture d'une version modifiée du code du programme, fournissant ainsi un système sous test modifié ;
d) l'exécution du code de programme modifié et la capture d'un état modifié du système sous test modifié, dans lequel la au moins une action générée par un utilisateur est reproduite par l'outil logiciel dédié ;
e) la comparaison de l'état actuel du système sous test et de l'état modifié du système sous test modifié et la détection de changements dans le système sous test, lesquels changements correspondent aux différences entre l'état actuel du système sous test et l'état modifié du système sous test ;
f) l'affichage d'au moins une partie des changements détectés pour un utilisateur et la sollicitation d'une entrée d'utilisateur correspondante quant à l'application ou à la suppression des changements affichés ; et
g) l'application des changements détectés à un composant correspondant ou la suppression des changements détectés sur la base de l'entrée d'utilisateur correspondante en mettant automatiquement à jour l'état actuel du système sous test ;
dans lequel au moins certains des changements détectés sont regroupés selon des caractéristiques prédéterminées ;
dans lequel ledit état actuel comprend tous les composants disponibles et tous les attributs des composants ;
**caractérisé en ce que**
lesdits changements détectés sont :
regroupés par composant ; ou
regroupés par type d'attribut et sont appliqués à un état actuel d'une pluralité de composants comprenant un élément avec un type d'attribut donné ; ou
regroupés par type de composant et sont appliqués à un état actuel d'une pluralité de composants d'un type donné ; ou
regroupés par parent et structure et sont appliqués à un état actuel d'un plus grand nombre de composants ou à tous les composants au sein d'une structure donnée pour un parent donné ; ou
définis comme des changements locaux par rapport à une caractéristique correspondante d'un composant parent et regroupés pour ledit composant parent ;
dans lequel chacun des changements regroupés est affiché sous la forme d'une différence unique à approuver ou à supprimer par l'utilisateur.

2. Procédé selon la revendication 1, dans lequel
lors de la réexécution, des composants cibles sont identifiés en comparant les composants du système sous test avec les composants du système sous test modifié et en créant des affectations individuelles entre un composant du système sous test et un composant correspondant du système sous test modifié.

3. Procédé selon la revendication 1, dans lequel
l'identification de composants individuels est effectuée sur la base d'une pluralité d'attributs différents par composant.

4. Procédé selon la revendication 1, dans lequel
l'identification de composants est au moins en partie basée sur des attributs supplémentaires, lesquels attributs supplémentaires sont générés pour un composant donné pendant ou en relation avec l'exécution du code de programme lors de la création de ce composant donné, lesquels attributs supplémentaires peuvent comprendre un ou plusieurs d'un groupe incluant une classe, un procédé, un numéro de ligne et une pile d'appels.

5. Procédé selon la revendication 1, dans lequel
des composants qui affichent des valeurs transitoires, en particulier le temps et/ou la date, sont exclus de l'affichage des changements détectés, de préférence sur la base d'une entrée d'utilisateur correspondante.

6. Procédé selon la revendication 1, dans lequel
avant l'exécution, un crochet d'exécution est spécifié par une entrée d'utilisateur, lequel crochet d'exécution est défini par une dernière action exécutée du système sous test, par un état actuel du système sous test et par une action à exécuter ensuite par le système sous test, ce crochet d'exécution définissant une ou plusieurs actions supplémentaires à exécuter ensuite avant ladite action à exécuter ensuite, dans lequel de préférence les actions supplémentaires sont appliquées automatiquement à une séquence d'actions enregistrée dans des situations similaires ou identiques.

7. Procédé selon la revendication 1, dans lequel
avant l'exécution, un crochet d'exécution est spécifié par une entrée d'utilisateur, lequel crochet d'exécution est défini par une dernière action exécutée du système sous test, par un état actuel du système sous test et par une pluralité d'actions à exécuter ensuite par le système sous test, ce crochet d'exécution définissant une ou plusieurs actions à éliminer parmi ladite pluralité d'actions à exécuter ensuite, dans lequel de préférence les actions à éliminer sont éliminées automatiquement d'une séquence d'actions enregistrée dans des situations similaires ou identiques.

8. Programme informatique comprenant des instructions qui, lorsque le programme est exécuté par un ordinateur, amènent l'ordinateur à réaliser le procédé selon l'une quelconque des revendications 1-7.

9. Système de test pour tester un code de programme correspondant à une interface utilisateur graphique au moyen d'un outil logiciel dédié, comprenant un code de logiciel tel que défini dans la revendication 8 pour fournir, lorsqu'il est exécuté sur un dispositif informatique approprié, ledit outil logiciel dédié qui interagit avec ledit code de programme pendant l'exécution de celui-ci, le système comprenant en outre ledit dispositif informatique approprié pour exécuter ledit code de logiciel, ledit code de programme et ledit code de programme modifié, ledit dispositif informatique incluant en outre un dispositif d'affichage graphique pour afficher des changements détectés pour un utilisateur, avec un dispositif d'entrée pour obtenir une entrée d'utilisateur en relation avec les changements affichés, et avec ledit outil logiciel dédié pour appliquer ou supprimer les changements affichés par l'utilisateur sur la base de l'entrée d'utilisateur.
